# EUROPÄISCHE PATENTSCHRIFT

(11) **EP 0 761 986 B1**
(45) Veröffentlichungstag und Bekanntmachung des Hinweises auf die Patenterteilung: **10.11.1999**
(21) Anmeldenummer: 96117514.8
(22) Anmeldetag: 14.09.1994
(51) Int. Cl.: F16B 5/06

(54) **Verbindungselement aus Kunststoff**
Plastic connecting element
Elément de connexion en plastique

(30) Priorität: 13.10.1993 DE 4334926
(43) Veröffentlichungstag der Anmeldung: 12.03.1997
(62) Teilanmeldung aus: 94114447.9
(73) Patentinhaber: TRW Automotive Electronics & Components GmbH & Co. KG, 78315 Radolfzell (DE)
(72) Erfinder: Bockenheimer, Alexander, 67307 Göllheim (DE); Kraus, Willibald, 67269 Grünstadt (DE)
(74) Vertreter: Schieschke, Klaus, Dipl.-Ing.

(56) Entgegenhaltungen:
- EP-A- 0 145 238
- US-A- 1 595 054
- US-A- 4 505 611

## Beschreibung

Die Erfindung betrifft ein Verbindungselement aus Kunststoff nach dem Oberbegriff des Anspruchs 1.

Als Stand der Technik ist bereits ein Verbindungselement bekannt (EP 0 641 939 A1), welches nach einer Ausführungsform zweiteilig ausgebildet ist. Ein erstes Element weist einen Ankerfuß und ein Kopfteil auf, welches im Querschnitt kreisförmig ausgebildet ist. Am äußeren Umfang dieses Kopfteils sind mehrere Rastnasen vorgesehen.

Das zweite Element umfasst eine Grundplatte mit einer Wandung, welche im wesentlichen die Form eines halben Hohlylinders besitzt. Innenseitig sind mehrere Rastrippen vorgesehen, welche zusammen mit den Rastnasen des ersten Elements beide Teile miteinander verbinden.

Weiterer Stand der Technik betrifft ein Verbindungselement (US-A-4,506,511), welches zwei einander gegenüberliegende, mehrfach abgeknickte elastische Arme zwischen einem Haltebereich und einem Befestigungsbereich aufweist.

Weiterer Stand der Technik ist ein Verbindungselement mit Zwischenteilen für einen Höhenausgleich (DE 39 33 305 C2), sowie ein dreiteiliges Verbindungselement mit einem weiteren Toleranzausgleich bezüglich einer Querebene (DE 40 14 589 C1). Alle vorgenannten Ausführungsformen sind relativ kompliziert aufgebaut und bezüglich ihres Toleranzausgleichs eingeschränkt.

Weiterer Stand der Technik betrifft ein Verbindungselement (US-A-1 595 054), welches ein mit zwei einander gegenüberliegenden, spiralförmigen elastischen Armen vorgesehenes Ringelement und ein mit Vertiefungen vorgesehenes, zylindrisches Element aufweist. Dieses Verbindungselement erlaubt ein schnelles Verbinden der beiden Elemente, aber braucht für das Lösen der Verbindung eine kombinierte Dreh- und Ziehbewegung. Die Anordnung der spiralförmigen Arme im Ringelement erlaubt keinen Toleranzausgleich in radiale Richtung. Da die Zahl der Vertiefungen größer ist als die Zahl der Arme ist eine Winkelverstellung zwischen dem Ringelement und dem zylindrischen Element möglich.

Demgegenüber liegt der vorliegenden Erfindung die Aufgabe zugrunde, ein Verbindungselement der eingangs genannten Art zu schaffen, welches bei einfachem Aufbau einen guten Toleranzausgleich in den in der Trägerebene liegenden Richtungen gewährleistet und außerdem eine Verbesserung der Winkelverstellbarkeit ermöglicht.

Diese Aufgabe wird mit den Merkmalen im kennzeichnenden Teil des Anspruchs 1 gelöst. Durch die elastischen Arme wird im Zusammenwirken mit den Rastelementen und den Gegenrastelementen auf einfache Weise ein guter Toleranzausgleich in den in der Trägerebene liegenden Richtungen erzielt.

In weiterer Ausgestaltung der Erfindung sind am Innenumfang des Befestigungsbereichs drei elastische Arme angeformt. Weiterhin kann der Befestigungsbereich zylindermantelförmig ausgebildet sein, wobei die elastischen Arme gleichmäßig über den Innenumfang des Zylindermantels verteilt sind.

Der Befestigungsbereich kann in weiterer Ausgestaltung der Erfindung an dem Träger angeschweißt, angeklebt oder eingeklippt sein. Weiterhin kann der Haltebereich in der Eingriffszone der Rastelemente bezüglich seiner Längsachse rotationssymmetrisch ausgebildet sein, wobei zusätzlich eine Verbesserung der Winkelverstellbarkeit dadurch gewährleistet ist, dass die Anzahl der Gegenrastelemente des Haltebereichs größer ist als die Anzahl der Rastelemente der vorderen Enden der elastischen Arme.

Die Erfindung wird nachfolgend anhand eines in der Zeichnung dargestellten Ausführungsbeispiels näher beschrieben.

In der Zeichnung zeigen:
- Fig. 1: eine Seitenansicht des Verbindungselements;
- Fig. 2: eine Draufsicht auf das Verbindungselement, ohne Träger;
- Fig. 3: eine perspektivische Ansicht des Verbindungselements gemäß Fig. 1 und 2.

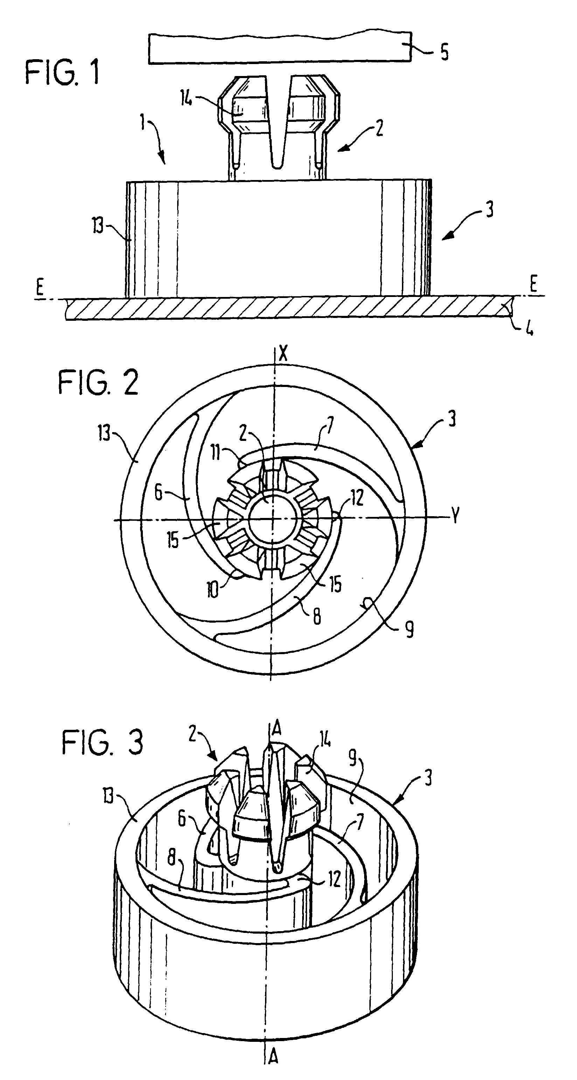

Das in den Fig. 1, 2 und 3 dargestellte aus Kunststoff bestehende Verbindungselement 1 weist einen Haltebereich 2 und einen Befestigungsbereich 3 auf. Der Haltebereich 2 kann mindestens ein an sich bekanntes federndes Element besitzen, welches zum Eingriff in eine in einem Teil 5 angeordnete, nicht näher dargestellte Öffnung geeignet ist.

Der Befestigungsbereich 3 kann an einem Träger 4 angeklebt, angeschweißt oder eingeklippt sein.

Wie aus den Fig. 2 und 3 ersichtlich, sind der Haltebereich 2 und der Befestigungsbereich 3 durch spiralförmig verlaufende, elastische Arme 6, 7, 8 miteinander verbunden. Diese elastischen Arme können etwa die Konfiguration eines Teils einer archimedischen Spirale aufweisen.

Bei dem dargestellten Ausführungsbeispiel ist der Befestigungsbereich 3 in Form eines Zylindermantels 13 ausgestaltet, an dessen Innenumfang 9 die drei elastischen Arme 6, 7, 8 angeformt sind. Die vorderen Enden 10, 11, 12 dieser elastischen Arme 6, 7, 8 sind mit dem Haltebereich 2 verbunden.

Durch diese Verbindung zwischen dem Haltebereich 2 und dem Befestigungsbereich 3 über die spiralförmig verlaufenden elastischen Arme 6, 7, 8 ist im Hinblick auf die Trägerebene E-E ein guter Toleranzausgleich auf einfache Weise gewährleistet. Hierdurch kann sich bspw. das Verbindungelement 1 gemäß Fig. 2 sowohl in X- als auch in Y-Richtung bewegen, wobei auch Zwischenlagen eingenommen werden können, so dass ein guter Toleranzausgleich erzielt wird.

Die vorderen Enden 10, 11, 12 der elastischen Arme 6, 7, 8 besitzen Rastelemente, welche in Gegenrastelemente 15 des Haltebereichs 2 einlagerbar sind. Derartige Gegenrastelemente sind bspw. Aussparungen, welche am Umfang des Haltebereichs 2 angeformt sind. Hierzu ist der Haltebereich 2 bezüglich seiner Längsachse A-A rotationssymmetrisch ausgebildet, und zwar vorzugsweise im Bereich der Eingriffszone der Rastelemente.

Um gegenüber dem Befestigungsbereich 3 eine Winkelverstellbarkeit zu gewährleisten, kann die Anzahl der Gegenrastelemente 15, d.h. der Aussparungen am Außenumfang des Haltebereichs 2, größer sein als die Anzahl der Rastelemente der vorderen Enden 10, 11, 12 der elastischen Arme 6, 7, 8. Damit besteht auf einfache Weise die Möglichkeit, den Haltebereich 2 gegenüber dem Befestigungsbereich 3 zu verdrehen und dann fest zu arretieren. Diese Konstruktion gewährleistet, daß der Haltebereich 3 mit dem zu halternden Teil 5 zusätzlich zum Toleranzausgleich eine Winkelverstellbarkeit ermöglicht.

## Patentansprüche

1. Verbindungselement aus Kunststoff mit einem ein Teil (5) halternden Haltebereich (2) und einem mit einem Träger (4), insbesondere einer Kraftfahrzeug-Karosserie, zu verbindenden Befestigungsbereich (3), wobei zwischen dem Teil (5) und dem Träger (4) ein Toleranzausgleich vorgesehen ist und wobei der Befestigungsbereich (3) getrennt vom Haltebereich (2) ausgebildet ist und beide Bereiche (2, 3) durch Rastelemente miteinander verbunden sind,
dadurch gekennzeichnet,
dass zum Toleranzausgleich in, in der Trägerebene liegenden Richtangen, der Haltebereich (2) und der Befestigungsbereich (3) durch spiralförmig verlaufende, elastische Arme (6, 7, 8) miteinander verbunden sind, deren vorderen Enden (10, 11, 12) Rastelemente aufweisen, welche in Gegenrastelemente (15) des Haltebereichs (2) einlagerbar sind.

2. Verbindungselement nach Anspruch 1,
dadurch gekennzeichnet,
dass am Innenumfang (9) des Befestigungsbereichs (3) drei elastische Arme (6, 7, 8) angeformt sind.

3. Verbindungselement nach Anspruch 1 und 2,
dadurch gekennzeichnet,
dass der Befestigungsbereich (3) zylindermantelförmig ausgebildet ist, wobei die elastischen Arme (6, 7, 8) gleichmäßig über den Innenumfang (9) des Zylindermantels (13) verteilt sind.

4. Verbindungselement nach einem der vorhergehenden Ansprüche,
dadurch gekennzeichnet,
dass der Befestigungsbereich (3) an dem Träger (4) angeschweißt, angeklebt oder eingeklippt ist.

5. Verbindungselement nach einem der vorhergehenden Ansprüche,
dadurch gekennzeichnet,
dass der Haltebereich (2) in der Eingriffszone der Rastelemente bezüglich seiner Längsachse (A-A) rotationssymmetrisch ausgebildet ist und dass die Anzahl der Gegenrastelemente (15) des Haltebereichs (2) größer ist als die Anzahl der Rastelemente der vorderen Enden (10, 11, 12) der elastischen Arme (6, 7, 8).

## Claims

1. Plastic connecting element, having a retaining region (2) which secures a part (5) and having a fastening region (3) which is to be connected to a carrier (4), in particular a motor-vehicle body, it being the case that tolerance compensation is provided between the part (5) and the carrier (4), and it being the case that the fastening region (3) is designed separately from the retaining region (2) and the two regions (2, 3) are connected to one another by latching elements, characterized in that, for tolerance compensation in directions which are located in the carrier plane, the retaining region (2) and the fastening region (3) are connected to one another by helically running, elastic arms (6, 7, 8), of which the front ends (10, 11, 12) have latching elements which can be positioned in mating latching elements (15) of the retaining region (2).

2. Connecting element according to Claim 1, characterized in that three elastic arms (6, 7, 8) are integrally formed on the inner circumference (9) of the fastening region (3).

3. Connecting element according to Claims 1 and 2, characterized in that the fastening region (3) is designed in the form of a lateral surface of a cylinder, it being the case that the elastic arms (6, 7, 8) are distributed uniformly over the inner circumference (9) of the lateral surface of the cylinder (13).

4. Connecting element according to one of the preceding claims, characterized in that the fastening region (3) is welded or adhesively bonded on, or clipped into, the carrier (4).

5. Connecting element according to one of the preceding claims, characterized in that the retaining region (2) is of rotationally symmetrical design in relation to its longitudinal axis (A-A) in the engagement zone of the latching elements, and in that the number of mating latching elements (15) of the retaining region (2) is greater than the number of latching elements of the front ends (10, 11, 12) of the elastic arms (6, 7, 8).

## Revendications

1. Élément de connexion en matière plastique comportant une zone de maintien (2) qui maintient une pièce (5), et une zone de fixation (3) à relier à un support (4), en particulier une carrosserie de véhicule automobile, dans lequel est prévue entre la pièce (5) et le support (4) une compensation de tolérances, et dans lequel la zone de fixation (3) est réalisée séparément de la zone de maintien (2) et les deux zones (2, 3) sont reliées l'une à l'autre par des éléments d'enclenchement,
caractérisé en ce que
pour la compensation de tolérances dans les directions situées dans le plan du support, la zone de maintien (2) et la zone de fixation (3) sont reliées l'une à l'autre au moyen de bras élastiques (6, 7, 8) s'étendant sous forme de spirale, dont les extrémités avant (10, 11, 12) comportent des éléments d'enclenchement susceptibles d'être mis en place dans des éléments d'enclenchement complémentaires (15) de la zone de maintien (2).

2. Élément de connexion selon la revendication 1, caractérisé en ce que trois bras élastiques (6, 7, 8) sont formés à la périphérie intérieure (9) de la zone de fixation (3).

3. Élément de connexion selon les revendications 1 et 2, caractérisé en ce que la zone de fixation (3) est réalisée sous forme d'une enveloppe cylindrique, et en ce que les bras élastiques (6, 7, 8) sont répartis régulièrement sur la périphérie intérieure (9) de l'enveloppe cylindrique (13).

4. Élément de connexion selon l'une des revendications précédentes, caractérisé en ce que la zone de fixation (3) est soudée, collée ou clipsée sur le support (4).

5. Élément de connexion selon l'une des revendications précédentes, caractérisé en ce que, dans la zone d'engagement des éléments d'enclenchement, la zone de maintien (2) est réalisée à symétrie de révolution par rapport à son axe longitudinal (A - A), et en ce que le nombre des éléments d'enclenchement complémentaires (15) de la zone de maintien (2) est supérieur au nombre des éléments d'enclenchement des extrémités antérieures (10, 11, 12) des bras élastiques (6, 7, 8).
